# EUROPÄISCHE PATENTSCHRIFT

(11) **EP 2 923 105 B1**
(45) Veröffentlichungstag und Bekanntmachung des Hinweises auf die Patenterteilung: **20.02.2019**
(21) Anmeldenummer: 13792690.3
(22) Anmeldetag: 20.11.2013
(51) Int. Cl.: F16D 65/097, F16D 55/225

(54) **SCHEIBENBREMSE EINES KRAFTFAHRZEUGS**
DISC BRAKE OF A MOTOR VEHICLE
FREIN À DISQUE D'UN VÉHICULE AUTOMOBILE

(30) Priorität: 20.11.2012 DE 102012111175; 22.02.2013 DE 102013101781
(43) Veröffentlichungstag der Anmeldung: 30.09.2015
(73) Patentinhaber: KNORR-BREMSE Systeme für Nutzfahrzeuge GmbH, 80809 München (DE)
(72) Erfinder: HABERMANN, Dimitrij, 94569 Stephansposching (DE); IRASCHKO, Johann, 85301 Schweitenkirchen (DE)
(86) Internationale Anmeldenummer: PCT/EP2013/074266
(87) Internationale Veröffentlichungsnummer: WO 2014/079870

(56) Entgegenhaltungen:
- EP-A2- 2 050 978
- DE-A1- 3 839 957
- DE-A1-102008 019 265
- DE-A1-102010 023 143

## Beschreibung

Die vorliegende Erfindung betrifft eine Scheibenbremse eines Kraftfahrzeugs gemäß dem Oberbegriff des Anspruchs 1.

Aus dem Stand der Technik, beispielsweise aus der DE 10 2010 023 143 A1 oder der EP 2 050 978 A2 bekannte konventionelle Bremsbelagsysteme von Scheibenbremsen weisen üblicherweise beidseitig einer Bremsscheibe zugeordnete Bremsbeläge mit einem Reibbelag und einer den Reibbelag tragenden Belagträgerplatte auf, welche radial federbelastet durch eine Belaghaltefeder gesichert in einem Belagschacht eines ortsfesten Bremsträgers mit die Bremsbeläge seitlich einfassenden einlaufseitigen und auslaufseitigen Bremsträgerhörner gehalten sind. Die Innenseiten dieser den Belagschacht seitlich begrenzenden Bremsträgerhörner sind dabei üblicherweise parallel zueinander ausgebildet, so dass ein üblicherweise mit zwei parallel zueinander ausgerichteten Seitenrändern ausgebildeter Bremsbelag radial von oben in den Belagschacht einführbar ist und mit Hilfe einer Belaghaltefeder, die von einem Belaghaltebügel überspannt wird und so zur Stabilisierung des Bremsbelags Beschleunigungen oder Rüttelbelastungen entgegenwirkt, die auf den Bremsbelags in dem Belagschacht durch von außen quer zur Zuspannrichtung wirkenden äußeren Kräften hervorgerufen werden.

Diese beim Bremsvorgang auf den Belag einwirkenden Querkräfte müssen über die Führungsflächen bzw. Abstützflächen in Gestalt der oben genannten Bremsträgerhörner in den Bremsträger eingeleitet werden. Aufgrund der limitierten Bauraumgegebenheiten können die Abstützflächen jedoch nicht optimal ausgeführt werden. Dies hat zur Folge, dass der Belag beim Bremsvorgang u.a. auch eine Drehbewegung ausführt. Diese Drehbewegung kann sich negativ auf das Lüftspiel, dem Freigang zwischenBremsbelag und Bremsscheibe, auf das Verschleißverhalten der Beläge, beispielsweise in Gestalt eines Schrägverschleißes, und dem Freigang der Beläge auswirken.

Problematisch ist, dass die Kraft der sich am Belaghaltebügel abstützenden Belaghaltefedern nicht so groß bemessen sein darf, dass ein radiales Herausheben des Bremsbelags bei Beschleunigungen jeglicher Größe verhindert wird, da sonst die für den Zuspannvorgang zu beaufschlagende Verschiebekraft zu hoch wäre und sich zudem nach einem erfolgten Bremsvorgang kein Lüftspiel zwischen den Bremsbelägen und der Bremsscheibe einstellen würde, was zu einer schleifenden Bremse führen würde.

Hebt allerdings ein Bremsbelag infolge äußerer Kräfte von seiner Aufstandsfläche am Boden des Belagsschachtes radial nach oben ab, so verkantet er in der Führung im Bremsträger, d.h. im Belagschacht, wodurch die Bewegung des Bremsbelages gebremst bzw. abgestoppt wird.

Um eine sichere Funktion der Scheibenbremse zu gewährleisten, ist es erforderlich, die Bremsbeläge im Bremsträger zuverlässig zu führen und zu fixieren.

Bei neueren Bremsbelagkonzepten mit asymetrisch ausgebildeten Bremsbelägen ist der Bremsbelag an einer Seitenstirnfläche über einen Formschluss an der Innenseite eines Trägerhorns des Bremsträgers geführt. Der Bremsbelag wird bei der Montage durch eine Schwenkbewegung in den Belagschacht eingesetzt, so dass die andere Stirnseitenfläche des Brembelags nach dem Einschwenken in die Arbeitsposition radial frei beweglich vor der Innenseite des gegenüberliegenden Trägerhorns des Bremsträgers liegt. Hebt dieser Bremsbelag nun auf Grund von außen quer zur Zuspannrichtung wirkenden äußeren Kräften auf dieser "freien" Seiten radial nach oben ab, so vergrößert sich der Abstand des Bremsbelages zu diesem Trägerhorn, wobei der Bremsbelag in seiner Bewegung radial weg von der Bremsscheibe weder gebremst noch auf sonstige Weise aufgehalten wird. Auch die Vorspannkraft der sich an dem Belaghaltebügel abstützenden Belaghaltefeder kann diese von außen einwirkenden Kräfte nicht abfangen. Der Bremsbelag hat somit einen großen Bewegungsspielraum, so dass nach einer solchen Schwenkbewegung des Bremsbelags radial nach außen bei einem anschließenden Zurückfallen auf die Aufstandsfläche am Boden des Belagschachtes aufschlägt. Dadurch wird ein großer Impuls erzeugt, der zum Bruch oder zum Reißen des Reibbelags des Bremsbelags führen kann.

Außerdem setzt der Einsatz eines solchen asymmetrischen Bremsbelags einen richtungsabhängigen Betrieb der Scheibenbremse voraus, d.h. dass vor der Montage der Bremse an einer Achse des Fahrzeuges die Laufrichtung bekannt sein muss bzw. festgelegt wird. Insbesondere für die Großserienmontage wäre es allerdings wünschenswert, einer solche Einschränkung nicht unterworfen zu sein.

Aufgabe der vorliegenden Erfindung ist es, eine Scheibenbremse eines Kraftfahrzeugs bereit zu stellen, die eine Fixierung der Bremsbeläge im Bremsträger derart gewährleistet, dass die Bremsbeläge in einer Zuspannrichtung leicht verschiebbar, aber radiale Verschwenkbewegungen des Bremsbelags aus dem Belagschacht heraus weitgehend verhinderbar sind.

Diese Aufgabe wird durch eine Scheibenbremse für ein Kraftfahrzeug mit den Merkmalen des Anspruchs 1 gelöst.

Bei der erfindungsgemäßen Bremsbelaghalterung ist im in den Belagschacht eingesetzten Zustand des jeweiligen Bremsbelages ausschließlich an einer dem einlaufseitigen Bremsträgerhorn zugewandten Seite der Belagträgerplatte ein Vorsprung ausgebildet, der in eine Ausnehmung auf der dem Belagschacht zugewandten Innenseite des einlaufseitigen Bremsträgerhorns eingesetzt ist. Des weiteren erstreckt sich ein Teilstück der Belaghaltefeder in der montierten Stellung über den dem auslaufseitigen Bremsträgerhorn zugewandten Rand der Belagträgerplatte in einen am auslaufseitigen Bremsträgerhorn angeformten Hinterschnitt.

Dadurch erfüllt die Belaghaltefeder eine Doppelfunktion. Zum einen erfüllt die Belaghaltefeder nach wie vor die Aufgabe, den Bremsbelag bei Rüttelbeanspruchung gegen Herausfallen zu sichern. Außerdem wird nun mit der Belaghaltefeder ein Herausdrehen des Bremsbelags aus dem Belagschacht des Bremsträgers wirksam verhindert. Mit der erfindungsgemäßen Bremsbelaghalterung wird außerdem eine Sicherung der Bremsbeläge im Bremsträger gegen ein Herausdrehen beim Bremsvorgang unabhängig von der Drehrichtung der Bremsscheibe, d.h. von der Laufrichtung des Kraftfahrzeugs erreicht, wobei das Herausdrehen des Bremsbelags am einlaufseitigen Bremsträgerhorn durch die zwischen einlaufseitigem Bremsträgerhorn und Bremsbelag ineinandergreifende Formgebung erreicht wird.

Durch die enge beidseitige Führung der Bremsbeläge im Bremsträger wird dabei neben der Laufrichtungsunabhängigkeit auch eine deutliche Verbesserung in der Rüttelstabilität sowie im Geräuschverhalten während einer Rüttelbeanspruchung erreicht.

Überdies werden die Belaghaltefedern aufgrund der verringerten Bewegungsmöglichkeit der Bremsbeläge bei dynamischer Beanspruchung erheblich entlastet.

Aufgrund der beidseitig wirkenden Herausdrehsicherung des Bremsbelags ist es außerdem ermöglicht, die Scheibenbremse in beiden Laufrichtungen ohne Funktionsbeeinträchtigung einzusetzen. Damit werden vor allem in der Großserienanwendung erhebliche Vereinfachungen des logistischen Ablaufs erzielt.

Vorteilhafte Ausführungsvarianten der Erfindung sind Gegenstand der Unteransprüche.

In einer vorteilhaften Weiterentwicklung ist das Teilstück der Belaghaltefeder als sich über den dem auslaufseitigen Bremsträgerhorn zugewandten Rand der Belagträgerplatte geradlinig erstreckendes Teilstück ausgebildet.

In einer alternativen Ausführungsvariante ist der Anschlag als hakenförmiges Teilstück der Belaghaltefeder ausgebildet, welches sich teilweise an die Kontur der Belagträgerplatte anschmiegt. Besonders bevorzugt ist an der Belagträgerplatte eine an die Kontur des als hakenförmiges Teilstück der Belaghaltefeder ausgebildeten Anschlags angepasste Ausnehmung angeformt, in die der Anschlag zur Montage bzw. Demontage des Bremsbelags hineindrückbar ist.

Beide oben genannten Ausführungsvarianten ermöglichen eine einfache Montage und Demontage der Bremsbeläge, wobei die Belaghaltefeder im Falle des als geradliniges Teilstück der Belaghaltefeder ausgebildeten Anschlags in einfacher Weise durch Wölbung der Belaghaltefeder von der Stirnseite der Belagträgerplatte weg aus dem Eingriff mit dem Hinterschnitt bringbar ist.

Im Falle des als hakenförmiges Teilstück der Belaghaltefeder ausgebildeten Anschlags kann durch die Ausnehmung an der Belagträgerplatte das hakenförmige Teilstück zur Demontage aus dem Hinterschnitt heraus in die Ausnehmung hineingedrückt werden, so dass der Bremsbelag anschließend aus dem Bremsträger herauschwenkbar ist.

Insbesondere bei der hakenförmigen Ausgestaltung des Teilstücks der Belaghaltefeder ist der Hinterschnitt im Querschnitt bevorzugt als u-förmiger Schlitz ausgebildet, wobei die Schlitzbreite bevorzugt bei einer bis drei Materialdicken des Belaghaltefederteilstückes liegt, um einerseits eine einfache Montage zu gewährleisten und andererseits ein möglichst geringes Spiel der Belagbewegung im Belagschacht zu gewährleisten.

Nachfolgend werden Ausführungsbeispiele der Erfindung anhand der beiliegenden Zeichnungen näher beschrieben. Es zeigen:
- Figur 1: eine schematische Ansicht auf einen Ausschnitt einer Ausführungsvariante einer Bremsbelaghalterung mit einer an einem Bremsträger gesicherten Belaghaltefeder;
- Figur 2: eine Detailansicht des mit II bezeichneten Ausschnitts der in Figur 1 gezeigten Bremsbelaghalterung,
- Figur 3: eine schematische Ansicht der in Figur 1 gezeigten Bremsbelaghalterung während der Demontage mit aus dem Eingriff mit dem Hinterschnitt des Bremsträgerhorns gelöster und gewölbter Belaghaltefeder,
- Figur 4: eine schematische Ansicht der in Figur 1 gezeigten Bremsbelaghalterung während der Demontage mit aus dem Bremsträger heraus geschwenktem Bremsbelag nach dem Lösen der Belaghaltefeder,
- Figur 5: eine schematische Ansicht auf einen Ausschnitt einer alternativen Ausführungsvariante einer Bremsbelaghalterung mit an einem Bremsträger befestigten Anschlag;
- Figur 6: eine Detailansicht des mit VI bezeichneten Ausschnitts der in Figur 5 gezeigten Bremsbelaghalterung,
- Figur 7: eine schematische Ansicht der in Figur 5 gezeigten Bremsbelaghalterung während der Demontage mit aus dem Eingriff mit dem Hinterschnitt des Bremsträgerhorns gelöster und gewölbter Belaghaltefeder und
- Figur 8: eine schematische perspektivische Ansicht der in Figur 1 gezeigten Bremsbelaghalterung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsbelaghalterung, des Bremsträgers, des Bremsbelags, der Belaghaltefeder und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

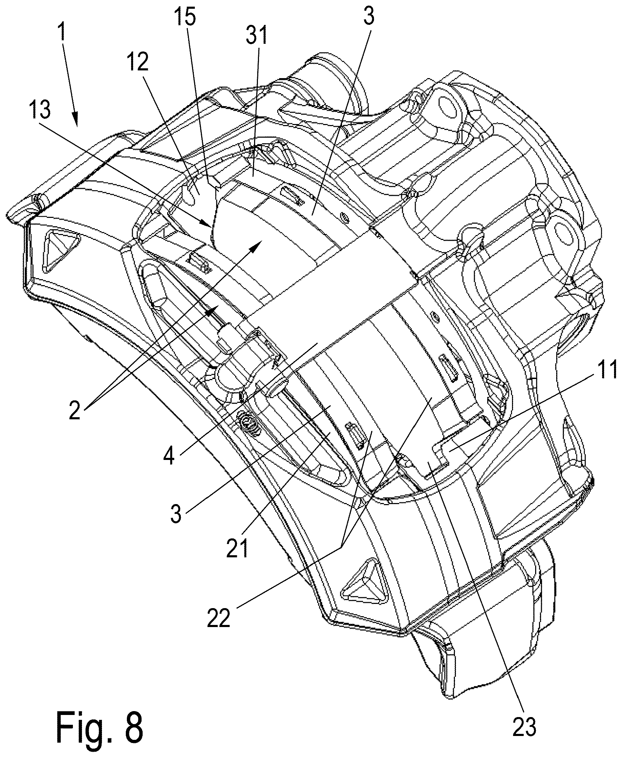

In Figur 8 ist die prinzipielle Anordnung einer Ausführungsvariante einer erfindungsgemäßen Bremsbelaghalterung für eine Scheibenbremse, insbesondere für ein Nutzfahrzeug, gezeigt.

Dabei ist ein Bremsbelag 2 mit einer Belagträgerplatte 21 und einem Reibbelag 22 in einem Belagschacht 13 eines Bremsträgers 1 eingesetzt. Der Bremsträger 1 überspannt dabei eine (nicht dargestellte) Bremsscheibe, die während der Fahrt des Kraftfahrzeugs in eine Hauptdrehrichtung X bei Vorwärtsfahrt mit einer Radachse des Kraftfahrzeugs dreht und die vorzugsweise beidseitig der Bremsscheibe angeordneten Bremsbeläge 2 bei einem Bremsvorgang an die Bremsscheibe anpressbar sind.

Der Belagschacht 13 wird dabei im Wesentlichen durch die Bremsbeläge 2 seitlich einfassende einlaufseitige und auslaufseitige Bremsträgerhörner 11, 12 und eine die Bremsträgerhörner 11, 12 miteinander verbindende Brücke gebildet, wobei der Abstand zwischen den beiden Bremsträgerhörnern 11, 12, betrachtet in der Hauptdrehrichtung X der Bremsscheibe, so bemessen ist, dass ein jeweiliger Bremsbelag 2, insbesondere die Belagträgerplatte 21 des Bremsbelags 2, bei der Montage zunächst mit einer ersten Seitenstirnfläche unter Ausbildung eines Formschlusses beispielsweise durch Ausbilden eines Vorsprungs 23 an der dem einlaufseitigen Bremsträgerhorn 11 zugewandten Seite der Belagträgerplatte, der in eine Ausnehmung auf der dem Belagschacht 13 zugewandten Innenseite des in Drehrichtung X der Bremsscheibe betrachtet vorderen ersten Bremsträgerhorn 11 und anschließend durch eine Schwenkbewegung vollständig in den Belagschacht 13 eingesetzt wird, so dass auch die gegenüberliegende Seitenstirnfläche der Belagträgerplatte 21 des Bremsbelags 2 dem zweiten Bremsträgerhorn 12 gegenüberliegt bzw. an diesem anliegt.

Der Bremsbelag 2 ist durch eine an sich bekannte Belaghaltefeder 3 in dem Belagschacht 13 gehalten, wobei die vorzugsweise als Blattfeder ausgebildete Belaghaltefeder 3 in der hier gezeigten Ausführungsvariante auf einer der Drehachse der Bremsscheibe abgewandten Oberseite des Belaghalteträgers 21 des Bremsbelags 2 fixiert ist und sich nach oben, d.h. von der Drehachse der Bremsscheibe weg an eine den Bremsträger 1 in Richtung der Fahrzeugachse überspannenden Belaghaltebügel 4 abstützt.

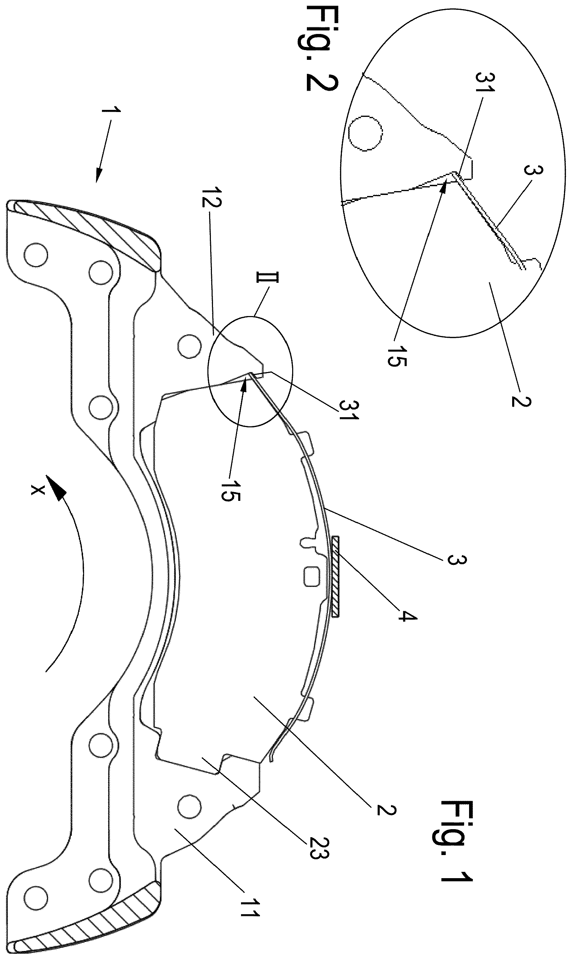

Wie insbesondere in den Figuren 1, 2, 5 und 6 gezeigt, ist die Längserstreckung der Belaghaltefeder 3 so ausgeführt, dass die Belaghaltefeder 3 im montierten Zustand mit ihrem der Auslaufseite zugewandten Ende sich bis in einen am auslaufseitigen Bremsträgerhorn 12 angeformten Hinterschnitt 15 erstreckt.

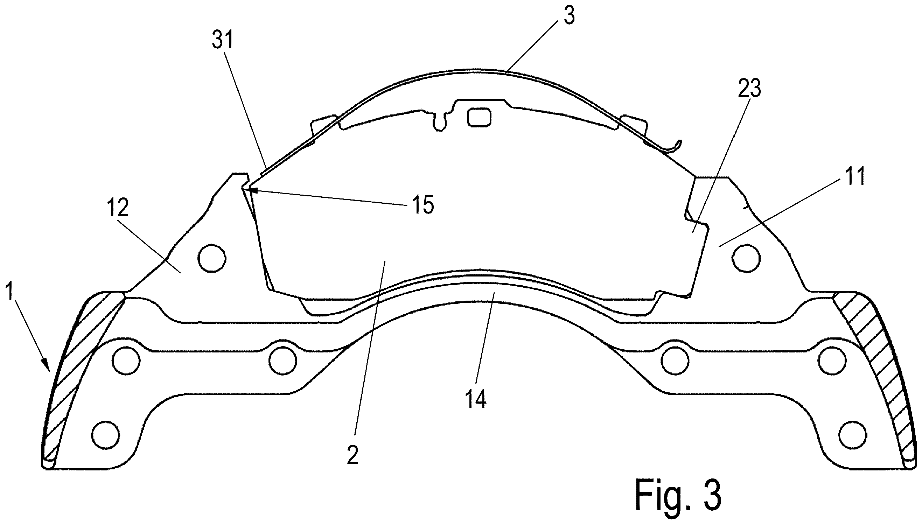

Dieser Hinterschnitt 15 ist dabei in einer ersten Ausführungsvariante, wie in den Figuren 1 bis 4 und 8 gezeigt ist, so geformt, dass sich ein in Richtung des auslaufseitigen Bremsträgerhorns 12 erstreckendes geradliniges Teilstück bzw. Endstück der Belaghaltefeder 3 in den Hinterschnitt 15 erstreckt und damit den Bremsbelag 2 in seiner Funktionsstellung im Bremsträger radial gesichert hält. Im montierten Zustand liegt dabei ein Teilstück des auslaufseitigen Bremsträgerhorns 12 radial zur Drehachse der Bremsscheibe über dem sich in den Hinterschnitt 15 des auslaufseitigen Bremsträgerhorns 12 erstreckenden Teilstücks 31 der Belaghaltefeder 3.

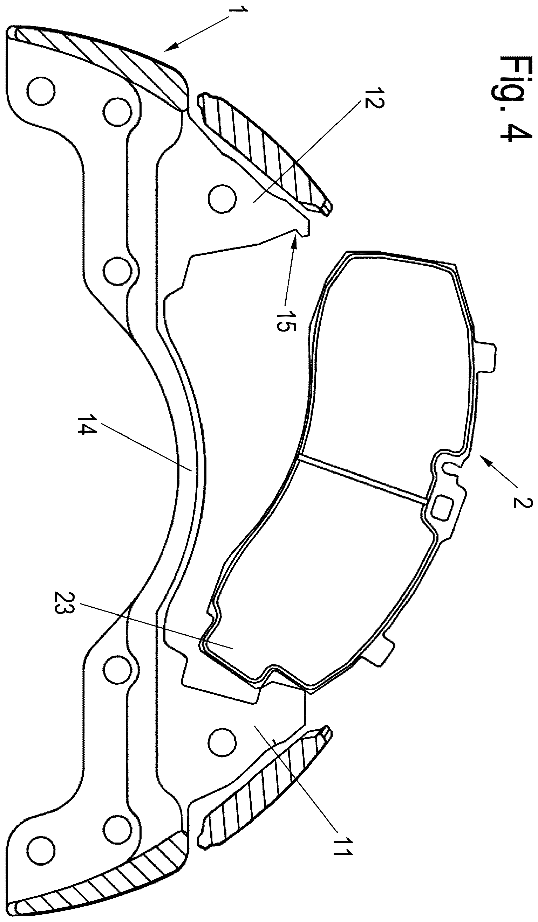

Zur Montage bzw. Demontage ist hier lediglich erforderlich, (bei der Demontage) zunächst die Belaghaltefeder 3 gegenüber der radial äußeren Stirnseite der Belagträgerplatte 21 anzuheben bzw. zu wölben. Dabei wird das Endstück 31 der Belaghaltefeder 3 aus dem Eingriff mit dem Hinterschnitt 15 des auslaufseitigen Trägerhorns 12 gelöst, so dass der Bremsbelag 2, wie in Figur 4 dargestellt ist, aus dem Bremsträger 1 herausgeschwenkt werden kann.

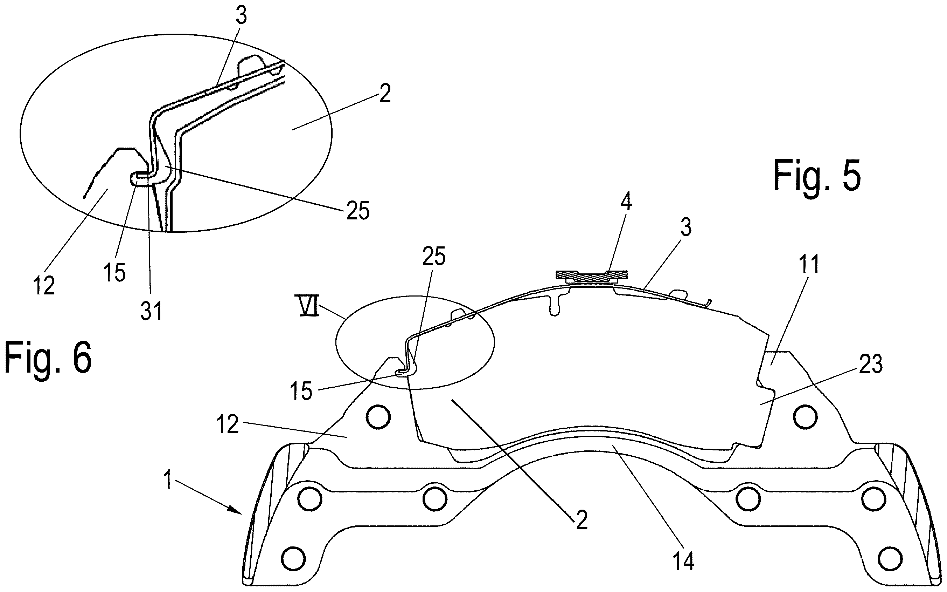

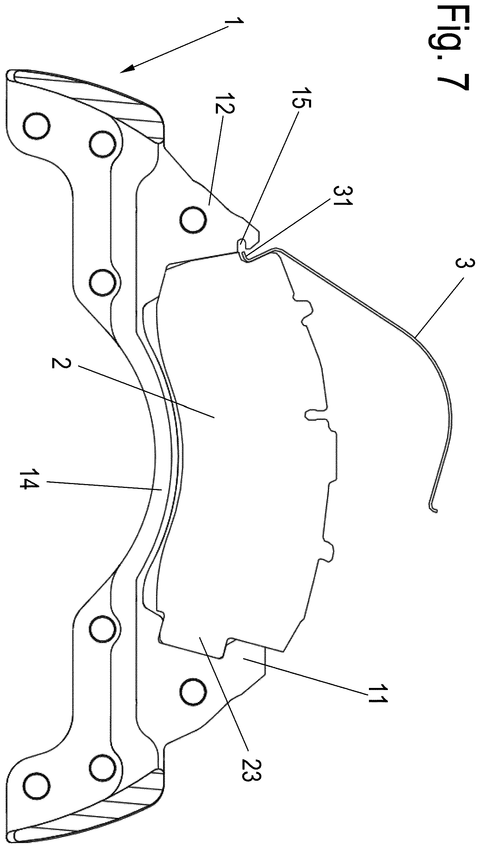

Bei der in den Figuren 5 bis 7 gezeigten Ausführungsvariante ist das Teilstück 31 der Belaghaltefeder 3 hakenförmig ausgebildet. Dieses hakenförmige Teilstück 31 ist dabei so ausgebildet, dass im entspannten Zustand der Belaghaltefeder 3 das freie Ende des hakenförmigen Teilstücks 31 in dem am auslaufseitigen Bremsträgerhorn 12 angeformten Hinterschnitt 15 einliegt und auf diese Weise den Bremsbelag 2 radial gesichert im Bremsträger 1 hält.

Besonders bevorzugt ist zur einfachen Montage und Demontage an der Belagträgerplatte 21 eine der Kontur des hakenförmigen Teilstücks 31 der Belaghaltefeder 3 angepasste Ausnehmung 25 auf der dem auslaufseitigen Trägerhorn zugewandten Stirnseite der Belagträgerplatte 21 angeformt, in die das Teilstück 31 zur Montage bzw. Demontage des Bremsbelags 2 hineindrückbar ist.

Die Formgestaltung des Hinterschnitts 15 beim auslaufseitigen Trägerhorn 12 kann dabei, wie in Figuren 1 bis 4 gezeigt, beispielsweise als im Querschnitt dreieckige Ausnehmung gestaltet sein, wobei sich das Teilstück 31 der Belaghaltefeder 3 an eine der Flächen des Hinterschnitts 15 anschmiegt.

Denkbar ist auch die Ausgestaltung des Hinterschnitts 15 in Gestalt eines u-förmigen Schlitzes, wie es in den Figuren 5 bis 8 gezeigt ist, welche sich insbesondere für die hakenförmige Ausgestaltung des Teilstücks 31 der Belaghaltefeder 3 eignet. Die Querschnittsbreite des Hinterschnittes 15 liegt dabei vorzugsweise in einem Bereich zwischen einer und drei Materialdicken des Teilstücks 31 der Belaghaltefeder 3.

Wenngleich in der obigen Beschreibung das in den Hinterschnitt 15 eingreifende Teilstück 31 der Belaghaltefeder 3 stets in einen am auslaufseitigen Trägerhorns 12 angeordneten Hinterschnitt eingreifend beschrieben ist, ist es ebenfalls denkbar, den Hinterschnitt 15 auf der Einlaufseite, d.h. am einlaufseitigen Trägerhorn 11 anzuordnen, so dass sich die Belaghaltefeder 3 einlaufseitig in den entsprechenden Hinterschnitt erstreckt und entsprechend einen Vorsprung 23, angeformt an der Belagträgerplatte 21, in einer Ausnehmung am auslaufseitigen Trägerhorn 12 vorzusehen. In allen Fällen wird mit der oben beschriebenen Bremsbelaghalterung eine Bremsbelaghalterung zur Halterung asymmetrisch geformter Bremsbeläge mit richtungsunabhängiger Belagführung bereitgestellt.

### Bezugszeichenliste

- 1: Bremsträger
- 2: Bremsbelag
- 3: Belaghaltefeder
- 4: Belaghaltebügel

- 11: einlaufseitiges Bremsträgerhorn
- 12: auslaufseitiges Bremsträgerhorn
- 13: Belagschacht
- 14: Brücke
- 15: Hinterschnitt
- 21: Belagträgerplatte
- 22: Reibbelag
- 23: Vorsprung
- 25: Ausnehmung
- 31: Teilstück der Belaghaltefeder

- X: Hauptdrehrichtung der Bremsscheibe

## Patentansprüche

1. Scheibenbremse eines Kraftfahrzeugs, insbesondere eines Nutzfahrzeugs, mit einer Bremsbelaghalterung, wobei beidseitig einer Bremsscheibe zugeordnete Bremsbeläge (2) mit einem Reibbelag (22) und einer den Reibbelag (22) tragenden Belagträgerplatte (21) federbelastet durch wenigstens eine Belaghaltefeder (3) radial auslenkbar jeweils in einem Belagschacht (13) eines ortsfesten Bremsträgers (1) mit die Bremsbeläge (2) seitlich einfassenden Bremsträgerhörnern (11, 12) gelagert sind, wobei die Belagträgerplatte (21) der Bremsbeläge (2) im eingebauten Zustand an einem einlaufseitigen Bremsträgerhorn (11) formschlüssig gehalten ist, **dadurch gekennzeichnet, dass** im in den Belagschacht (13) eingesetzten Zustand des jeweiligen Bremsbelages (2) ausschließlich an einer dem einlaufseitigen Bremsträgerhorn (11) zugewandten Seite der Belagträgerplatte (21) ein Vorsprung (23) ausgebildet ist, der in eine Ausnehmung auf der dem Belagschacht (13) zugewandten Innenseite des einlaufseitigen Bremsträgerhorns (11) eingesetzt ist, und dass ein Teilstück (31) der Belaghaltefeder (3) sich in der montierten Stellung über den dem auslaufseitigen Bremsträgerhorn (12) zugewandten Rand der Belagträgerplatte (21) in einen am auslaufseitigen Bremsträgerhorn (12) angeformten Hinterschnitt (15) erstreckt.

2. Scheibenbremse nach Anspruch 1, **dadurch gekennzeichnet, dass** das Teilstück (31) der Belaghaltefeder (3) als sich über den dem auslaufseitigen Bremsträgerhorn (12) zugewandten Rand der Belagträgerplatte (21) geradlinig erstreckendes Teilstück ausgebildet ist.

3. Scheibenbremse nach Anspruch 1, **dadurch gekennzeichnet, dass** das Teilstück (31) der Belaghaltefeder (3) hakenförmig ausgebildet ist.

4. Scheibenbremse nach Anspruch 3, **dadurch gekennzeichnet, dass** an der Belagträgerplatte (21) eine der Kontur des hakenförmigen Teilstücks (31) der Belaghaltefeder (3) angepasste Ausnehmung (25) angeformt ist, in die das Teilstück (31) der Belaghaltefeder (3) zur Montage bzw. Demontage des Bremsbelages (2) hineindrückbar ist.

5. Scheibenbremse nach einem der vorstehenden Ansprüche, **dadurch gekennzeichnet, dass** die Belaghaltefeder (3) als Blattfeder ausgebildet ist.

6. Scheibenbremse nach einem der vorstehenden Ansprüche, **dadurch gekennzeichnet, dass** der Hinterschnitt (15) im Querschnitt als u-förmiger Schlitz ausgebildet ist.

7. Scheibenbremse nach Anspruch 6, **dadurch gekennzeichnet, dass** die Querschnittsbreite des Hinterschnitts (15) zwischen einer und drei Materialdicken des Teilstücks (31) der Belaghaltefeder (3) beträgt.

8. Scheibenbremse nach einem der vorstehenden Ansprüche 1 bis 5, **dadurch gekennzeichnet, dass** der Hinterschnitt (15) im Querschnitt dreieckig ausgebildet ist.

## Claims

1. A disc brake of a motor vehicle, in particular a commercial vehicle, having a brake pad retaining device, wherein brake pads (2) assigned to the two sides of a brake disc and having a friction lining (22) and a lining carrier plate (21) carrying the friction lining (22) are mounted, spring-loaded and radially deflectable by at least one pad retaining spring (3), in a lining shaft (13) of a stationary brake carrier (1) with brake carrier lugs (11, 12) which laterally border the brake pads (2), when fitted, the pad carrier plate (21) of the brake pads (2) being held in a form fit to an inlet-side brake carrier lug (11), **characterised in that** when the brake pad (2) is inserted in the lining shaft (13) there is formed exclusively on a side of the pad carrier plate (21) facing the inlet-side brake carrier lug (11) a projection (23), which is introduced into a recess on the inside of the inlet-side brake carrier lug (11) facing the lining shaft (13), and that in the fitted position a section (31) of the pad retaining spring (3) extends over the edge of the pad carrier plate (21) facing the outlet-side brake carrier lug (12) into a indentation (15) formed at the outlet-side brake carrier lug (12).

2. A disc brake according to claim 1, **characterised in that** the section (31) of the pad retaining spring (3) is designed as a section that extends in a straight line over the edge of the pad carrier plate (21) facing the outlet-side brake carrier lug (12).

3. A disc brake according to claim 1, **characterised in that** the section (31) of the pad retaining spring (3) is hook-shaped in design.

4. A disc brake according to claim 3, **characterised in that** formed on the pad carrier plate (21) is a recess (25) adapted to the contour of the hook-shaped section (31) of the pad retaining spring (3), into which recess the section (31) of the pad retaining spring (3) can be pressed to assemble and/or disassemble the brake pad (2).

5. A disc brake according to any of the preceding claims, **characterised in that** the pad retaining spring (3) is designed as a leaf spring.

6. A disc brake according to any of the preceding claims, **characterised in that** the cross-section of the indentation (15) is designed as a U-shaped slit.

7. A disc brake according to claim 6, **characterised in that** the cross-sectional width of the indentation (15) is between one and three material thicknesses of the section (31) of the pad retaining spring (3).

8. A disc brake according to any of the preceding claims 1 to 5, **characterised in that** the indentation (15) is designed with a triangular cross-section.

## Revendications

1. Frein à disque d'un véhicule automobile, notamment d'un véhicule utilitaire, comprenant une fixation de garniture de frein, dans lequel des garnitures (2) de frein, associées des deux côtés à un disque de frein, ayant une garniture (22) de friction et une plaque (21) de porte-garniture portant la garniture (22) de friction sont, en étant soumises à l'action d'au moins un ressort (3) de maintien de garniture, montées avec possibilité d'être écartées radialement, respectivement dans un puits (13) de garniture d'un support (1) de frein fixe ayant des cornes (11, 12) de support de frein enchâssant latéralement les garnitures (2) de frein, la plaque (21) de porte-garniture des garnitures (2) de frein étant à l'état monté maintenue à complémentarité de forme sur une corne (11) du porte-frein du côté de l'entrée, **caractérisé en ce qu'**à l'état, inséré dans le puits (13) de garniture, de la garniture (2) de frein respective est constituée exclusivement d'un côté, tourné vers la corne (11) du support de frein du côté de l'entrée, de la plaque (21) de porte-garniture, une saillie (23), qui est insérée dans un évidement du côté intérieur, tourné vers le puits (13) de garniture, de la corne (11) du support de frein du côté de l'entrée et **en ce qu'**une sous-pièce (31) du ressort (3) de maintien de garniture s'étend, en la position montée, sur le bord, tourné vers la corne (12) de support de frein du côté de la sortie, de la plaque (21) de porte-garniture dans une contre-dépouille (15) formée sur la corne (12) du support de frein du côté de la sortie.

2. Frein à disque suivant la revendication 1, **caractérisé en ce que** la sous-pièce (31) du ressort (3) de maintien de garniture est constituée sous la forme d'une sous-pièce s'étendant en ligne droite sur le bord, tourné vers la corne (12) de support de frein du côté de la sortie, de la plaque (21) de porte-garniture.

3. Frein à disque suivant la revendication 1, **caractérisé en ce que** la sous-pièce (31) du ressort (3) de maintien de garniture a la forme d'un crochet.

4. Frein à disque suivant la revendication 3, **caractérisé en ce que**, sur la plaque (21) de porte-garniture, est formé un évidement (25), qui est adapté au contour de la sous-pièce (31) en forme de crochet du ressort (3) de maintien de garniture et dans lequel la sous-pièce (31) du ressort (3) de maintien de la garniture peut être enfoncée pour le montage ou le démontage de la garniture (2) de frein.

5. Frein à disque suivant l'une des revendications précédentes, **caractérisé en ce que** le ressort (3) de maintien de la garniture est constitué sous la forme d'un ressort à lame.

6. Frein à disque suivant l'une des revendications précédentes, **caractérisé en ce que** la contre-dépouille (15) est constituée sous la forme d'une fente en forme de U en section transversale.

7. Frein à disque suivant la revendication 6, **caractérisé en ce que** la largeur de la section transversale de la contre-dépouille (15) représente entre une et trois épaisseurs de matériau de la sous-pièce (31) du ressort (3) de maintien de la garniture.

8. Frein à disque suivant l'une des revendications 1 à 5, **caractérisé en ce que** la contre-dépouille (15) a une section transversale triangulaire.
